# EUROPEAN PATENT SPECIFICATION

(11) **EP 2 074 305 B1**
(45) Date of publication and mention of the grant of the patent: **01.08.2012**
(21) Application number: 06836279.7
(22) Date of filing: 12.10.2006
(51) Int. Cl.: F02K 1/09, F02K 3/06, F02K 1/15

(54) **GAS TURBINE ENGINE SYSTEM COMPRISING A TRANSLATING CORE COWL AND OPERATIONAL METHOD THEREOF**
GASTURBINENTRIEBWERK MIT EINER HAUBE MIT TRANSLATORISCH VERSCHIEBBAREM KERN UND VERFAHREN ZU DEREN BETRIEB
TURBINE À GAZ AVEC UN CAPOT CENTRAL MOBILE ET PROCEDE DE FONCTIONNEMENT DE CELLE-CI.

(43) Date of publication of application: 01.07.2009
(73) Proprietor: United Technologies Corporation, Hartford, CT 06101 (US)
(72) Inventor: SCHAFER, Bradley C., Ellington, CT 06029 (US)
(74) Representative: Leckey, David Herbert
(86) International application number: PCT/US2006/039935
(87) International publication number: WO 2008/045061

(56) References cited:
- GB-A- 2 198 999
- US-A- 3 897 001

## Description

### BACKGROUND OF THE INVENTION

The present invention generally relates to a gas turbine engine, and more particularly to a turbofan gas turbine engine having a core cowl including a translating section for varying a discharge airflow cross-sectional area of the gas turbine engine.

In an aircraft gas turbine engine, such as a turbofan engine, air is pressurized in a compressor, and mixed with fuel and burned in a combustor for generating hot combustion gases. The hot combustion gases flow downstream through turbine stages that extract energy from the gases. A high pressure turbine powers the compressor, while a low pressure turbine powers a fan section located upstream of the compressor.

Combustion gases are discharged from the turbofan engine through a core exhaust nozzle, and fan air is discharged through an annular fan exhaust nozzle defined at least partially by a fan nacelle surrounding the core engine. A significant amount of propulsion thrust is provided by the pressurized fan air which is discharged through the fan exhaust nozzle. The combustion gases are discharged through the core exhaust nozzle to provide additional thrust.

A significant amount of the air pressurized by the fan section bypasses the engine for generating propulsion thrust in turbofan engines. High bypass turbofans typically require large diameter fans to achieve adequate turbofan engine efficiency. Therefore, the nacelle of the turbofan engine must be large enough to support the large diameter fan of the turbofan engine. Disadvantageously, the relatively large size of the nacelle results in increased weight, noise and drag that may offset the propulsive efficiency achieved by the high bypass turbofan engine.

It is known in the field of aircraft gas turbine engines that the performance of the turbofan engine varies during diverse flight conditions experienced by the aircraft. Typical turbofan engines are designed to achieve maximum performance during normal cruise operation of the aircraft. Therefore, when combined with the necessity of a relatively large nacelle size, increased noise and decreased efficiency may be experienced by the aircraft at non-cruise operating conditions such as takeoff, landing, cruise manoeuvre and the like. US 3897001A describes a nozzle and auxiliary inlet arrangement for a gas turbine engine. GB 2188999A describes a fluid propulsion engine with a flow exist control device.

Accordingly, it is desirable to provide a reduced weight turbofan engine having a variable discharge airflow cross-sectional area that achieves improved engine performance during diverse flight conditions in a relatively inexpensive and simple manner.

### SUMMARY OF THE INVENTION

According to a first aspect of the present invention, there is provided a gas turbine engine system, as claimed in claim 1.

An example core nacelle, includes a core cowl positioned adjacent to an inner duct boundary of a fan bypass passage having an associated discharge airflow cross-sectional area. The core cowl includes a translating section located aft of an exit guide vane positioned within the fan bypass passage. The translating section is moveable to vary the discharge airflow cross-sectional area.

An example gas turbine engine system includes a fan nacelle having a fan exhaust nozzle, a core nacelle within the fan nacelle, a core cowl having a translating section, a sensor that produces a signal representing an operability condition and a controller in communication with the sensor to move the translating section between a first position and a second position. The first position includes a first discharge airflow cross-sectional area and the second position includes a second discharge airflow cross-sectional area greater than the first discharge airflow cross- sectional area. The translating section of the core cowl is moved between the first position and the second position in response to detecting the operability condition.

According to a second aspect of the present invention, there is provided a method of controlling a discharge airflow cross-sectional area of a gas turbine engine as claimed in claim 13.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 illustrates a general perspective view of an example gas turbine engine;
Figure 2 is a schematic view of an example gas turbine engine having a core cowl moveable between a first position and a second position;

Figure 3 illustrates a partial perspective view of an example configuration of a core cowl disposed about an engine centerline axis; and

Figure 4 illustrates an exploded cross-sectional view of an example configuration of the core cowl illustrated in Figure 2.

### DETAILED DESCRIPTION OF THE PREFERRED EMBODIMENT

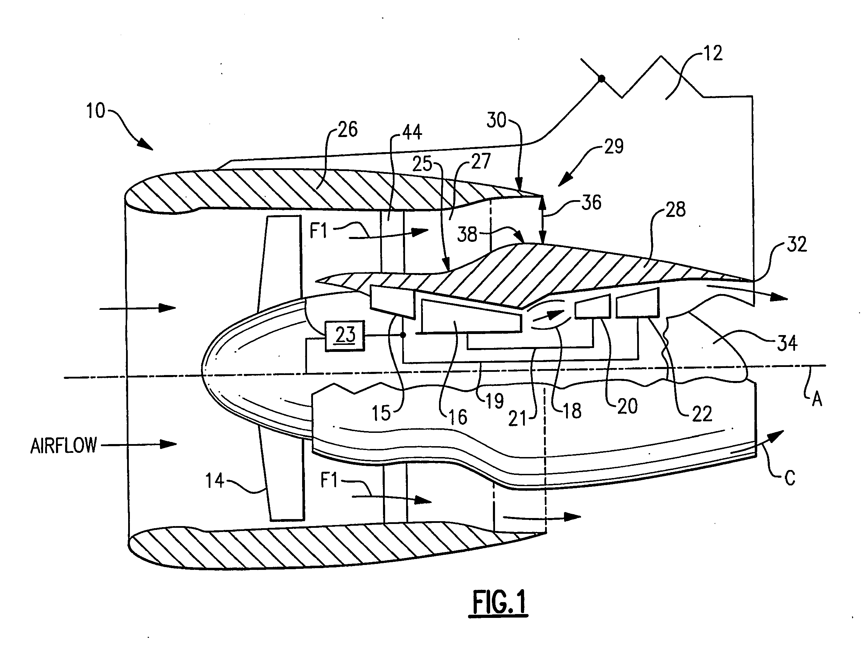

Referring to Figure 1, a gas turbine engine 10 suspends from an engine pylon 12 as is typical of an aircraft designed for subsonic operation. In one example, the gas turbine engine is a geared turbofan aircraft engine. The gas turbine engine includes a fan section 14, a low pressure compressor 15, a high pressure compressor 16, a combustor 18, a high pressure turbine 20 and a low pressure turbine 22. A low speed shaft 19 rotationally supports the low pressure compressor 15 and the low pressure turbine 22 and drives the fan section 14 through a gear train 23. A high speed shaft 21 rotationally supports the high pressure compressor 16 and a high pressure turbine 20. The low speed shaft 19 and the high speed shaft 21 rotate about a longitudinal centerline axis A of the gas turbine engine 10.

During operation, air is pressurized in the compressors 15, 16 and is mixed with fuel and burned in the combustor 18 for generating hot combustion gases.
The hot combustion gases flow through the high and low pressure turbines 20, 22 which extract energy from the hot combustion gases.

The example gas turbine engine 10 is in the form of a high bypass ratio (i.e., low fan pressure ratio geared) turbofan engine mounted within a fan nacelle 26, in which most of the air pressurized by the fan section 14 bypasses the core engine itself for the generation of propulsion thrust. The example illustrated in Figure 1 depicts a high bypass flow arrangement in which approximately 80% of the airflow entering the fan nacelle 26 may bypass the core nacelle 28 via a fan bypass passage 27. The high bypass flow arrangement provides a significant amount of thrust for powering the aircraft.

In one example, the bypass ratio is greater than 10 to 1, and the fan section 14 diameter is substantially larger than the diameter of the low pressure compressor 15. The low pressure turbine 22 has a pressure ratio that is greater than 5 to 1, in one example. The gear train 23 can be any known gear system, such as a planetary gear system with orbiting planet gears, planetary system with non-orbiting planet gears or other type of gear system. In the disclosed example, the gear train 23 has a constant gear ratio. It should be understood, however, that the above parameters are only exemplary of a contemplated geared turbofan engine. That is, the invention is applicable to other engine architectures, including direct drive turbofans.

A fan airflow F1 is communicated within the fan bypass passage 27 and is discharged from the engine 10 through a fan exhaust nozzle 30, defined radially between a core nacelle 28 and the fan nacelle 26. Core exhaust gases C are discharged form the core nacelle 28 through a core exhaust nozzle 32 defined between the core nacelle 28 and a tail cone 34 disposed coaxially therein around the longitudinal centerline axis A of the gas turbine engine 10.

The fan exhaust nozzle 30 concentrically surrounds the core nacelle 28 near an aftmost segment 29 of the fan nacelle 26, in this example. In other examples, the fan exhaust nozzle 30 is located farther upstream but aft of the fan section 14. The fan exhaust nozzle 30 defines a discharge airflow cross-sectional area 36 between the fan nacelle 26 and the core nacelle 28 for axially discharging the fan airflow F1 pressurized by the upstream fan section 14.

An exit guide vane 44 is positioned downstream of the fan section 14 within the fan bypass passage 27. The exit guide vane 44 reduces the instability of the fan airflow F1 that is communicated from the fan section 14 into the fan bypass passage 27. Stabilizing the fan airflow F1 reduces the amount of engine thrust loss experienced by the aircraft.

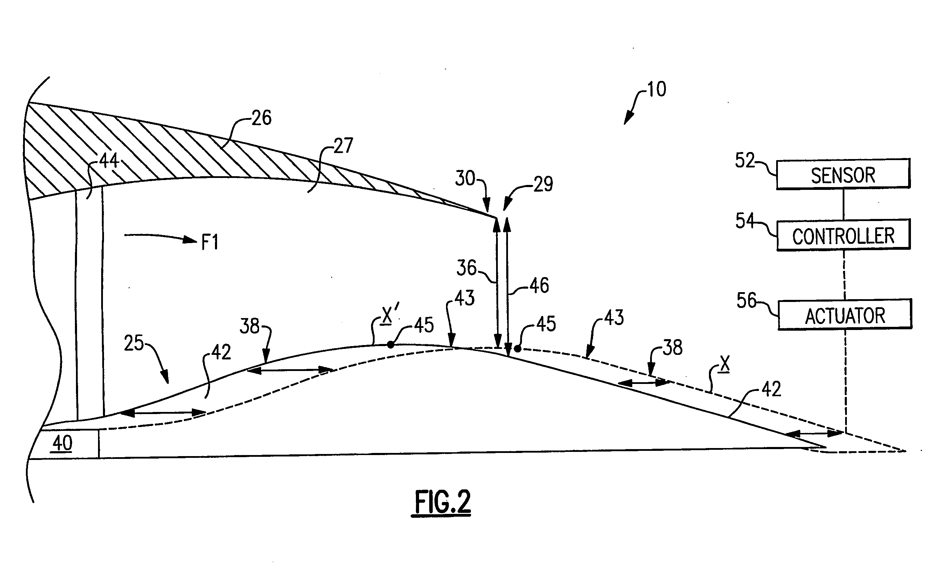

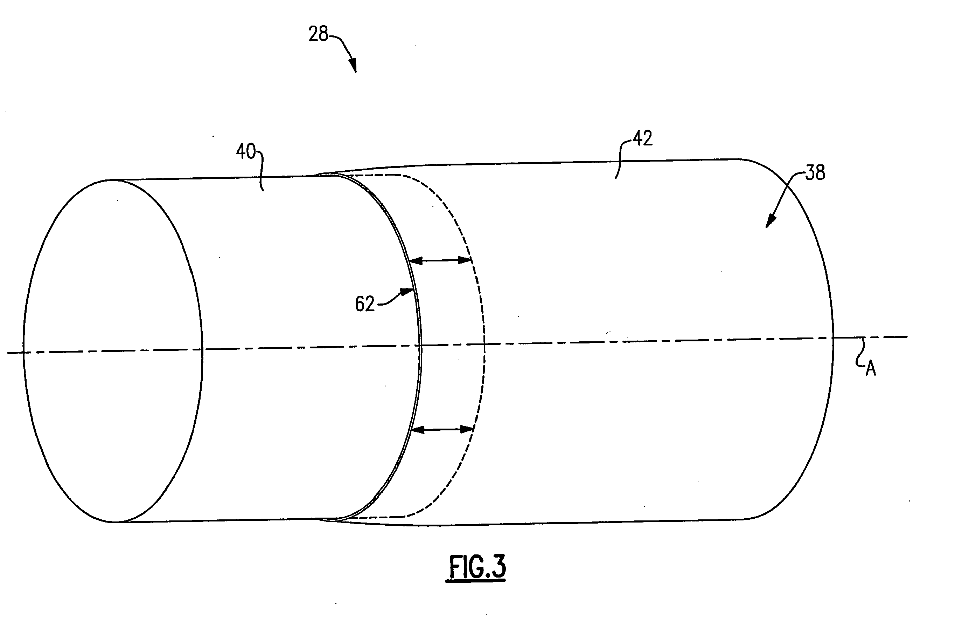

Figure 2 illustrates a core cowl 38 of the gas turbine engine 10. The core cowl 38 represents an exterior flow surface of a section of the core nacelle 28. The core cowl 38 is positioned adjacent an inner duct boundary 25 of the fan bypass passage 27. The example core cowl 38 includes a stationary section 40 and a translating section 42, each of which is disposed circumferentially about the engine centerline axis A (see Figure 3). In one example, the stationary section 40 of the core cowl 38 is positioned forward from an exit guide vane 44. In another example, the translating section 42 of the core cowl 38 is positioned aft (i.e., downstream) from the exit guide vane 44. The actual positioning and configuration of the core cowl 38 will vary depending upon design specific parameters including, but not limited to, the size of the core nacelle and the efficiency requirements of the gas turbine engine 10.

In the illustrated example, the discharge airflow cross-sectional area 36 extends between the aftmost segment 29 of the fan nacelle 26 adjacent to the fan exhaust nozzle 30 and the translating section 42 of the core cowl 38. Varying the discharge airflow cross-sectional area 36 of the gas turbine engine 10 during specific flight conditions provides improved efficiency of a gas turbine engine 10. In one example, the discharge airflow cross-sectional area 36 is varied by translating the translating section 42 of the core cowl 38 forward (i.e., upstream) from its original position.

The translating section 42 of the cored cowl 38 is selectively moved from a first position X (represented by phantom lines) to a second position X' (represented by solid lines) in response to detecting an operability condition of the gas turbine engine 10, in one example. In another example, the translating section 42 is selectively moveable between a plurality of positions each having different discharge airflow cross-sectional areas.

The example translating section 42 includes a curved outer surface 43. The curved outer surface 43 defines an apex point 45 near a peak of the curved outer surface 43. The apex point 45 moves relative to the aftmost segment 29 of the fan nacelle 26 to vary the discharge airflow cross-sectional area as the translating section 42 is moved between the first position X and the second position X'.

In the illustrated example, a discharge airflow cross-sectional area 46 associated with the second position X' is greater than the discharge airflow cross-sectional area of the first position X. In one example, the operability condition includes a takeoff condition. In another example, the operability condition includes a landing condition. In yet another example, the operability condition includes a crosswind condition. However, the translating section 42 may be translated between the first position X and the second position X', or any other position between the first position X and the second position X', in response to any known operability condition, such as climb conditions and windmilling conditions.

The translating section 42 is selectively moved to control the air pressure of the fan airflow F1 within the fan bypass passage 27. For example, positioning the translating section at the first position X reduces the discharge airflow cross-sectional area, which restricts the fan airflow F1 and produces a pressure build-up (i.e., an increase in air pressure) within the fan bypass passage 27. Movement of the translating section 42 to the second position X' increases the discharge airflow cross-sectional area, which permits more fan airflow F1 and reduces the pressure build-up (i.e., a decrease in air pressure) within the fan bypass passage 27.

A sensor 52 detects the operability condition and communicates with a controller 54 to translate the core cowl 38 between the first position X and the second position X' via an actuator assembly 56. Of course, this view is highly schematic. It should be understood that the sensor 52 and the controller 54 are programmable to detect known flight conditions. That is, the controller 54 is programmed to move the translating section 42 to influence the discharge airflow cross-sectional area of the gas turbine engine 10 during varied flight conditions. A person of ordinary skill in the art having the benefit of teachings herein will be able to program the controller 54 to communicate with the actuator assembly 56 to translate the translating section 42 between the first position X and the second position X'.

The distance the translating section 42 translates in response to detecting the operability condition will vary depending on design specific parameters. The actuator assembly 56 returns the translating section 42 of the core cowl 38 to the first position X during normal cruise operation (e.g., a generally constant speed at generally constant, elevated altitude) of the aircraft. The discharge airflow cross-sectional area 46 permits an increased amount of fan airflow F1 to exit the fan exhaust nozzle 30 as compared to the discharge airflow cross-sectional area 36. Therefore, the design of the fan section 14 may be optimized for diverse operability conditions of the aircraft.

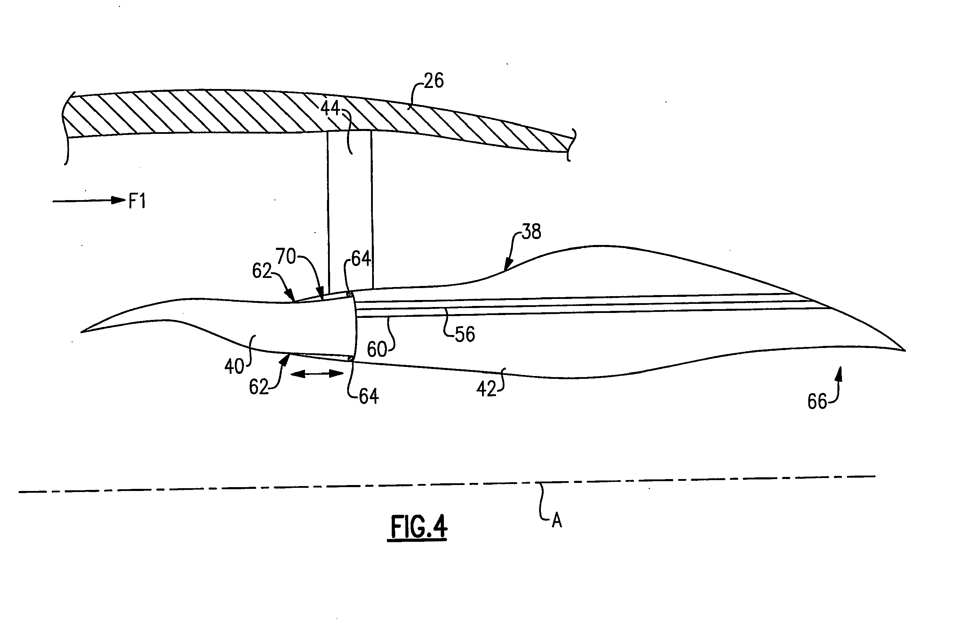

Figure 4 illustrates an example configuration of the core cowl 38. The example translating section 42 is axially translatable along an exterior surface 70 of the stationary section 40 of the core cowl 38 in a direction parallel to the longitudinal centerline axis A. In one example, the translating section 42 is moveable in an upstream direction.

The core cowl 38 includes a cavity 60 for storing the actuator assembly 56, in this example. The cavity 60 is positioned within the structural casing of the core nacelle 26. In one example, the actuator assembly 56 includes a ball screw. In another example, the actuator assembly 56 is a linear actuator assembly. The actuator assembly 56 may use hydraulic, electromechanical, electrical or any other power source to move the translating section 42 of the core cowl 38.

A leading edge 62 of the translating section 42 is aerodynamically designed to minimize disturbance of the fan airflow F1 as the fan airflow F1 is communicated downstream within the fan bypass passage 27. In one example, the leading edge 62 tapers from an aft of the leading edge 62 to the leading edge 62. Advantageously, an aerodynamic flow surface is provided as the translating section 42 translates over the exterior surface 70 of the stationary section 40 such that flow disturbance of the fan airflow F1 is minimized and engine operability and efficiency is improved.
An air seal 64 is provided near the leading edge 62 of the translating section 42 of the core cowl 38, in one example. In another example, an air seal (not shown) is optionally provided near a trailing edge 66 of the translating section 42. The air seals 64, in combination with the aerodynamic leading edge 62, reduce the disturbance of the fan airflow F1 and the fan airflow FI is communicated through the fan bypass passage 27. In addition, the air seals 64 prevent leakage of the fan airflow FI and of hot core gases within the core nacelle 28. The air seals 64 may include any known sealing member.
The foregoing description shall be interpreted as illustrative and not in any limiting sense. A worker of ordinary skill in the art would recognize that certain modifications would come within the scope of this invention. For that reason, the following claims should be studied to determine the true scope and content of this invention.

## Claims

1. A gas turbine engine system comprising:
a fan nacelle (26) defined about an axis and having a fan exhaust nozzle; and
a core nacelle (28);
wherein a fan bypass passage (27) is defined between said fan nacelle (26) and said core nacelle (28), said core nacelle comprising:
a core cowl (38) positioned adjacent an inner duct boundary (25) of a fan bypass passage (27) having an associated discharge airflow cross-sectional area (36, 46), wherein said core cowl (38) includes at least one translating section (42) located aft of an exit guide vane (44) positioned within said fan bypass passage (27), said at least one translating section (42) being selectively moveable to vary said discharge airflow cross-sectional area (36, 46); **characterised in that** said system further comprises:
at least one air seal (64) near a leading edge (62) of said at least one translating section (42) to prevent leakage of a fan airflow and hot core gases within an interior of said core nacelle (28).

2. The gas turbine engine system as recited in claim 1, wherein said discharge airflow cross-sectional area (36, 46) is defined between an inner surface of a fan nacelle (26) and said core cowl (38).

3. The gas turbine engine system as recited in claim 1, wherein said leading edge (62) of said at least one translating section (42) is tapered from aft of said leading edge to said leading edge (62).

4. The gas turbine engine system as recited in claim 1, wherein said translating section (42) moves in an upstream direction to vary said discharge airflow cross-sectional area (36, 46).

5. The gas turbine engine system as recited in claim 1, wherein said at least one translating section (42) includes a curved outer surface having an apex point, wherein said apex point moves relative to an aftmost segment of a fan nacelle (26) in response to movement of said at least one translating section (42).

6. The gas turbine engine system of claim 1, wherein:
said at least one translating section (42) is selectively moveable between a first position (X) having a first discharge airflow cross-sectional area (36) and a second position (X') having a second discharge airflow cross-sectional area (46) greater than said first discharge airflow cross-sectional area (36); said gas turbine engine system further comprising:
a turbofan positioned within said fan nacelle (26);
a gear train (23) that drives at least said turbofan;
at least one compressor (15, 16) and at least one turbine (20, 22) positioned downstream of said turbofan;
at least one combustor (18) positioned between said at least one compressor (15, 16) and said at least one turbine (20, 22);
at least one sensor (52) that produces a signal representing an operability condition; and
a controller (54) that receives said signal, wherein said controller (54) selectively moves said at least one translating section (42) between said first position (X) and said second position (X') in response to said signal.

7. The gas turbine engine system as recited in claim 6, comprising an actuator assembly (56) in communication with said controller (54) and operable to move said at least one translating section (42) between said first position (X) and said second position (X').

8. The gas turbine engine system as recited in claim 7, wherein said actuator assembly (56) is mounted within a cavity (60) of said core cowl (38), wherein said actuator assembly (56) includes at least one of a ball screw and a linear actuator assembly.

9. The gas turbine engine system as recited in claim 6, wherein said at least one translating section (42) is axially moveable between said first position (X) and said second position (X').

10. The gas turbine engine system as recited in claim 6, wherein said at least one translating section (42) is axially moveable between a plurality of positions between said first position (X) and said second position (X').

11. The gas turbine engine system as recited in claim 1 or 6, wherein said core cowl (38) includes a stationary section (40) forward of said exit guide vane (44), wherein said at least one translating section (42) is at least partially slideable over an exterior surface of said stationary section (40).

12. The gas turbine engine system as recited in claim 6, wherein the operability condition includes at least one of a take-off condition, a climb condition, a landing condition, a cross-wind condition and a windmilling condition.

13. A method of controlling a discharge airflow cross-sectional area of a gas turbine engine with a gas turbine engine system according to any of the claims 1 to 12, comprising the steps of:
(a) sensing an operability condition; and
(b) selectively translating an aft section (42) of a core cowl (38) having at least one air seal (64) positioned near a leading edge (62) of said aft section (42) in response to sensing the operability condition to control the discharge airflow cross-sectional area (36, 46).

14. The method as recited in claim 13, wherein the aft section (42) of the core cowl (38) is selectively moveable between a first position (X) having a first discharge airflow cross-sectional area (36) and a second position (X') having a second discharge airflow cross-sectional area (46) greater than the first discharge airflow area (36), wherein said step (b) comprises:
translating the aft section (42) of the core cowl (38) from the first position (X) to the second position (X') in response to sensing the operability condition,
and optionally comprising the step of:
(c) returning the aft section (42) of the core cowl (38) to the first position (X) in response to detection of a cruise operation.

15. The method as recited in claim 13, wherein the core cowl (38) includes a stationary section (40) positioned upstream from the aft section (42) of the core cowl (38) and said step (b) comprises:
sliding the aft section (42) of the core cowl (38) along an exterior surface of the stationary section (40).

## Patentansprüche

1. Gasturbinenmaschinensystem umfassend:
eine Bläsergondel (26), die um eine Achse definiert ist und eine Bläserausgangsdüse aufweist; und
eine Kerngondel (28);
wobei ein Bläsernebenstromweg (27) zwischen der Bläsergondel (26) und der Kerngondel (28) definiert ist, wobei die Kerngondel umfasst:
eine Kernummantelung (38), die benachbart einer inneren Leitungsbegrenzung (25) eines Bläsernebenstromweges (27) angeordnet ist, der einen zugehörigen Ablassluftstrom-Querschnittsbereich (36, 46) aufweist, wobei die Kernummantelung (38) zumindest einen Translationsbereich (42) beinhaltet, der hinter einer Ausgangsleitschaufel (44) angeordnet ist, die innerhalb des Bläsernebenstromweges (27) angeordnet ist, wobei der zumindest eine Translationsbereich (42) selektiv bewegbar ist, um den Ablassluftstrom-Querschnittsbereich (36, 46) zu variieren; **dadurch gekennzeichnet, dass** das System des Weiteren umfasst:
zumindest eine Luftdichtung (64) nahe einer Vorderkante (62) des zumindest einen Translationsbereichs (42), um Leckage eines Bläserluftstroms und heißer Kerngase innerhalb eines Inneren der Kerngondel (28) zu verhindern.

2. Gasturbinenmaschinensystem nach Anspruch 1, wobei der Ablassluftstrom-Querschnittsbereich (36, 46) zwischen einer inneren Fläche einer Bläsergondel (26) und der Kernummuntelung (38) definiert ist.

3. Gasturbinenmaschinensystem nach Anspruch 1, wobei sich die Vorderkante (62) des zumindest einen Translationsbereichs (42) von hinter der Vorderkante hin zu der Vorderkante (62) verjüngt.

4. Gasturbinenmaschinensystem nach Anspruch 1, wobei sich der Translationsbereich (42) in eine stromaufwärtige Richtung bewegt, um den Ablassluftstrom-Querschnittsbereich (36, 46) zu variieren.

5. Gasturbinenmaschinensystem nach Anspruch 1, wobei der zumindest eine Translationsbereich (42) eine gebogene äußere Fläche beinhaltet, die einen Scheitelpunkt aufweist, wobei sich der Scheitelpunkt relativ zu einem hintersten Segment der Bläsergondel (26) in Erwiderung auf eine Bewegung des zumindest einen Translationsbereichs (42) bewegt.

6. Gasturbinenmaschinensystem nach Anspruch 1, wobei:
der zumindest eine Translationsbereich (42) selektiv zwischen einer ersten Position (X), die einen ersten Ablassluftstrom-Quersehnittsbereich (36) aufweist, und einer zweiten Position (X') bewegbar ist, die einen zweiten Ablassluftstrom-Querschnittsbereich (46) aufweist, der größer als der erste Ablassluftstrom-Querschnittsbereich (36) ist; wobei das Gasturbinenmaschinensystem des Weiteren umfasst:
einen Turbobläser, der innerhalb der Bläsergondel (26) angeordnet ist;
einen Getriebestrang (23), der zumindest den Turbobläser antreibt;
zumindest einen Verdichter (15, 16) und zumindest eine Turbine (20, 22), die stromabwärts des Turbobläsers angeordnet sind;
zumindest eine Brenneinrichtung (18), die zwischen dem zumindest einen Verdichter (15, 16) und der zumindest einen Turbine (20, 22) angeordnet ist;
zumindest einen Sensor (52), der ein Signal erzeugt, das einen Betriebszustand repräsentiert; und
einen Steuerer/Regler (54), der ein Signal empfängt, wobei der Steuerer/Regler (54) selektiv den zumindest einen Translationsbereich (42) zwischen der ersten Position (X) und der zweiten Position (X') in Erwiderung auf das Signal bewegt.

7. Gasturbinenmaschinensystem nach Anspruch 6, umfassend eine Aktuatoranordnung (56), die in Kommunikation mit dem Steuerer/Regler (54) steht und betreibbar ist, um den zumindest einen Translationsbereich (42) zwischen der ersten Position (X) und der zweiten Position (X') zu bewegen.

8. Gasturbinenmaschinensystem nach Anspruch 7, wobei die Aktuatoranordnung (56) innerhalb einer Aussparung (60) der Kernummantelung (38) angebracht ist, wobei die Aktuatoranordnung (56) zumindest eines aus einer Kugelgewindespindel und einer linearen Aktuatoranordnung beinhaltet.

9. Gasturbinenmaschinensystem nach Anspruch 6, wobei der zumindest eine Translationsbereich (42) axial zwischen der ersten Position (X) und der zweiten Position (X') bewegbar ist.

10. Gasturbinenmaschinensystem nach Anspruch 6, wobei der zumindest eine Translationsbereich (42) axial zwischen einer Mehrzahl von Positionen zwischen der ersten Position (X) und der zweiten Position (X') bewegbar ist.

11. Gasturbinenmaschinensystem nach Anspruch 1 oder 6, wobei die Kernummantelung (38) einen stationären Bereich (40) vor der Ausgangsleitschaufel (44) beinhaltet, wobei der zumindest eine Translationsbereich (42) zumindest teilweise über eine äußere Fläche des stationären Bereichs (40) gleitbar ist.

12. Gasturbinenmaschinensystem nach Anspruch 6, wobei der Betriebszustand zumindest eines aus einem Startzustand, einen Steigzustand, einen Landezustand, einem Querwind-Zustand und einem Freidreh-Zustand beinhaltet.

13. Verfahren zum Steuern/Regeln eines Ablassluftstrom-Querschnittsbereichs einer Gasturbinenmaschine mit einem Gasturbinenmaschinensystem nach einem der Ansprüche 1 bis 12 umfassend die Schritte:
(a) Erkennen eines Betriebszustandes; und
(b) selektives Verschieben eines hinteren Bereichs (42) einer Kernummantelung (38), die zumindest eine Luftdichtung (64) aufweist, die nahe einer Vorderkante (62) des hinteren Bereichs (42) angeordnet ist, in Erwiderung auf das Erkennen des Betriebszustandes, um den Ablassluftstrom-Querschnittsbereich (36, 46) zu steuern/regeln.

14. Verfahren nach Anspruch 13, wobei der hintere Bereich (42) der Kernummantelung (38) selektiv zwischen einer ersten Position (X), die einen ersten Ablassluftstrom-Querschnittsbereich (36) aufweist, und einer zweiten Position (X') bewegbar ist, die einen zweiten Ablassluftstrom-Querschnittsbereich (46) aufweist, der größer als der erste Ablassluftstrombereich (36) ist, wobei der Schritt (b) umfasst:
Verschieben des hinteren Bereichs (42) der Kernummantelung (38) von der ersten Position (X) zu der zweiten Position (X') in Erwiderung auf das Erkennen des Betriebszustandes, und optional umfassend den Schritt:
(c) Rückführen des hinteren Bereichs (42) der Kernummantelung (38) an die erste Position (X) in Erwiderung auf das Detektieren eines Reisebetriebs.

15. Verfahren nach Anspruch 13, wobei die Kernummantelung (38) einen stationären Bereich (40) beinhaltet, der stromaufwärts von dem hinteren Bereich (42) der Kernummantelung (38) angeordnet ist, und wobei Schritt (b) umfasst:
Gleiten des hinteren Bereichs (42) der Kernummantelung (38) entlang einer äußeren Fläche des stationären Bereichs (40).

## Revendications

1. Système de moteur à turbine à gaz, comprenant :
une nacelle (26) de soufflante définie autour d'un axe et comportant une tuyère d'éjection de soufflante ; et
une nacelle (28) de noyau ;
un passage de contournement (27) de soufflante étant défini entre ladite nacelle (26) de soufflante et ladite nacelle (28) de noyau, ladite nacelle de noyau comprenant :
un carter (38) de noyau occupant une position adjacente à une limite de canal intérieure (25) d'un passage de contournement (27) de soufflante possédant une superficie en section transversale de flux d'air d'échappement associée (36, 46), ledit carter (38) de noyau comportant au moins un tronçon en translation (42) situé à l'arrière d'une aube directrice de sortie (44) placée à l'intérieur dudit passage de contournement (27) de soufflante, ledit au moins un tronçon en translation (42) étant déplaçable de manière sélective pour faire varier ladite superficie en section transversale de flux d'air d'échappement (36, 46) ;
le système étant **caractérisé en ce qu'**il comprend :
au moins un joint étanche à l'air (64) à proximité d'un bord d'attaque (62) dudit au moins un tronçon en translation (42) destiné à empêcher la fuite d'un flux d'air de soufflante et de gaz chauds de noyau à l'intérieur de ladite nacelle (28) de noyau.

2. Système de moteur à turbine à gaz selon la revendication 1, ladite superficie en section transversale de flux d'air d'échappement (36, 46) étant définie entre une surface intérieure d'une nacelle (26) de soufflante et ledit carter (38) de noyau.

3. Système de moteur à turbine à gaz selon la revendication 1, ledit bord d'attaque (62) dudit au moins un tronçon en translation (42) se rétrécissant entre l'arrière dudit bord d'attaque et ledit bord d'attaque (62).

4. Système de moteur à turbine à gaz selon la revendication 1, ledit tronçon en translation (42) se déplaçant dans une direction amont pour faire varier ladite superficie en section transversale de flux d'air d'échappement (36, 46).

5. Système de moteur à turbine à gaz selon la revendication 1, ledit au moins un tronçon en translation (42) comportant une surface extérieure incurvée présentant un sommet, lequel sommet se déplace par rapport à un segment le plus en arrière d'une nacelle (26) de soufflante suite à un déplacement dudit au moins un tronçon en translation (42).

6. Système de moteur à turbine à gaz selon la revendication 1,
ledit au moins un tronçon en translation (42) étant déplaçable de manière sélective entre une première position (X) présentant une première superficie en section transversale de flux d'air d'échappement (36) et une deuxième position (X') présentant une deuxième superficie en section transversale de flux d'air d'échappement (46) supérieure à ladite première superficie en section transversale de flux d'air d'échappement (36) ;
ledit système de moteur à turbine à gaz comprenant en outre :
une turbosoufflante placée à l'intérieur de ladite nacelle (26) de soufflante ;
un train d'engrenages (23) qui entraîne au moins ladite turbosoufflante ;
au moins un compresseur (15, 16) et au moins une turbine (20, 22) placés en aval de ladite turbosoufflante ;
au moins une chambre de combustion (18) placée entre ledit au moins un compresseur (15, 16) et ladite au moins une turbine (20, 22) ;
au moins un capteur (52) qui produit un signal représentant une condition de fonctionnement possible ; et
un module de commande (54) qui reçoit ledit signal, lequel module de commande (54) déplace de manière sélective ledit au moins un tronçon (42) entre ladite première position (X) et ladite deuxième position (X') en réponse audit signal.

7. Système de moteur à turbine à gaz selon la revendication 6, comprenant un ensemble actionneur (56) en communication avec ledit module de commande (54) et apte à déplacer ledit au moins un tronçon en translation (42) entre ladite première position (X) et ladite deuxième position (X').

8. Système de moteur à turbine à gaz selon la revendication 7, ledit ensemble actionneur (56) étant monté à l'intérieur d'une cavité (60) dudit carter (38) de noyau, lequel ensemble actionneur (56) comporte une vis à billes et/ou un ensemble actionneur linéaire.

9. Système de moteur à turbine à gaz selon la revendication 6, ledit au moins un tronçon en translation (42) étant déplaçable axialement entre ladite première position (X) et ladite deuxième position (X').

10. Système de moteur à turbine à gaz selon la revendication 6, ledit au moins un tronçon en translation (42) étant déplaçable axialement entre une pluralité de positions comprises entre ladite première position (X) et ladite deuxième position (X').

11. Système de moteur à turbine à gaz selon la revendication 1 ou 6, ledit carter (38) de noyau comportant un tronçon fixe (40) à l'avant de ladite aube directrice de sortie (44), ledit au moins un tronçon en translation (42) étant susceptible de coulisser au moins partiellement par-dessus une surface extérieure dudit tronçon fixe (40).

12. Système de moteur à turbine à gaz selon la revendication 6, la condition de fonctionnement possible comprenant au moins une des conditions suivantes : une condition de décollage, une condition de montée, une condition d'atterrissage, une condition de vent de travers et une condition de moulinage.

13. Procédé de réglage d'une superficie en section transversale de flux d'air d'échappement d'un moteur à turbine à gaz au moyen d'un système de moteur à turbine à gaz selon l'une quelconque des revendications 1 à 12, le procédé comprenant les étapes consistant à :
(a) détecter une condition de fonctionnement possible ; et
(b) déplacer en translation de manière sélective un tronçon arrière (42) d'un carter (38) de noyau comportant au moins un joint étanche à l'air (64) placé à proximité d'un bord d'attaque (62) dudit tronçon arrière (42) en réponse à la détection de la condition de fonctionnement possible afin de régler la superficie en section transversale de flux d'air d'échappement (36, 46).

14. Procédé selon la revendication 13, le tronçon arrière (42) du carter (38) de noyau étant déplaçable de manière sélective entre une première position (X) présentant une première superficie en section transversale de flux d'air d'échappement (36) et une deuxième position (X') présentant une deuxième superficie en section transversale de flux d'air d'échappement (46) supérieure à la première superficie en section transversale de flux d'air d'échappement (36),
ladite étape (b) comprenant l'étape consistant à :
déplacer en translation le tronçon arrière (42) du carter (38) de noyau depuis la première position (X) jusqu'à la deuxième position (X') en réponse à la détection de la condition de fonctionnement possible et,
le procédé comprenant éventuellement l'étape consistant à :
(c) renvoyer le tronçon arrière (42) du carter (38) de noyau dans la première position (X) en réponse à la détection d'un fonctionnement de croisière.

15. Procédé selon la revendication 13, le carter (38) de noyau comportant un tronçon fixe (40) placé en amont du tronçon arrière (42) du carter (38) de noyau, et ladite étape (b) comprenant l'étape consistant à :
faire coulisser le tronçon arrière (42) du carter (38) de noyau le long d'une surface extérieure du tronçon fixe (40).
